# EUROPÄISCHE PATENTANMELDUNG

(11) **EP 1 454 526 A1**
(43) Veröffentlichungstag der Anmeldung: **08.09.2004**
(21) Anmeldenummer: 04003457.1
(22) Anmeldetag: 17.02.2004
(51) Int. Cl.: A01L 11/00

(54) **Schneidgerät**

(30) Priorität: 06.03.2003 DE 20303667 U
(71) Anmelder: Harry P. Will Werkzeugfabrik GmbH & Co. KG, 35279 Neustadt/Hessen (DE)
(72) Erfinder: Still, Thomas E., 35260 Stadtallendorf (DE)
(74) Vertreter: Olbricht, Karl Heinrich, Dipl.-Phys.

(57) **Zusammenfassung**

Ein Schneidgerät (10) für Kunststoff-Hufbeschläge hat eine Grundplatte (12), auf der eine Welle (30) gelagert ist, die ein neben einer Werkstück-Auflage (16) befindliches Schneidrad (18) trägt und mittels einer Handhabe (20) in beiden Drehrichtungen antreibbar ist. Die Grundplatte (12) haltert einen Lagerbock für die Welle (30) mit einem Winkel (14), der aus der Grundplatte (12) unter 90° zur Plattenoberfläche hochgekantet ist. In einer Buchse (32) ist die Welle (30) geführt, an der das als Messer, Kreissägeblatt o.dgl. ausgebildete Schneidrad (18) auswechselbar befestigt ist. Es kann einseitig einen spitzwinkeligen Konusschliff (19) und/oder eine Zahnung aufweisen, namentlich mit asymmetrischem Zahnprofil. Oberhalb des Schneidrades (18) kann ein Schutzblech (28) vorhanden sein. Eine Handhabe (20) mit verlängerbarem Griffhebel ist als auf einen profilierten Wellenstummel (34) aufsteckbare Kurbel, Handratsche o.dgl. ausgebildet. Die auf der Grundplatte (12) verstellbar und/oder austauschbar angebrachte Werkstück-Auflage (16) definiert zu dem Schneidrad (18) hin einen Schnittspalt. Sie kann einer Huf-Gestalt angepasst oder anpassbar sein und besitzt Haltemittel für das Werkstück, z.B. eine Klemmeinrichtung.

## Beschreibung

Die Erfindung betrifft ein Schneidgerät für Kunststoff-Hufbeschläge gemäß dem Oberbegriff von Anspruch 1.

Das Beschlagen von Pferdehufen ist alte Tradition der Hufschmiede. Dabei werden warmgeschmiedete Hufeisen passender Kontur und Größe auf den Huf gebrannt und dann genagelt. Die eisernen "Sohlen" haben den Vorteil recht langer Nutzungsdauer; nachteilig ist jedoch unter anderem ihr relativ hohes Gewicht und die starre Form, die auch nicht immer optimal auf dem Huf saß bzw. sitzt.

Vor etlichen Jahren kamen Kunststoff-Beschläge in Gebrauch, um die Gelenke und Knochen der Pferde zu schonen. Beispiele für solchen elastisch-nachgiebigen Hufschutz sind in DE 94 09 971 U1, DE 195 38 093 C2 und DE 196 30 660 C2 beschrieben. Damit werden Bodenunebenheiten gut ausgeglichen, zumal unter der Last des Körpergewichts nicht nur eine vertikale Abfederung, sondern auch eine begrenzte horizontale Aufweitung der Aufstandfläche stattfindet. Stollen können das Laufen im freien Gelände unterstützen.

Typisch bestehen derartige Hufbeschläge aus transparentem Kunststoff, beispielsweise aus Polyurethan. Solches Material ist nur mit Schwierigkeiten dauerhaft verklebbar; es löst sich unter wechselnder Belastung nach verhältnismäßig kurzer Zeit. Bewährt hat sich weiterhin das Aufnageln auf den Huf. Dies wird erleichtert, wenn man in einem weißen Randbereich, dem sog. Leben, vorab die besten Stellen für möglichst wenige Nägel markiert, die das Wandhorn aber nur minimal belasten dürfen. Wichtig sind im übrigen glatte Flächen, damit sich das Pferd nicht verletzen kann, selbst wenn einmal Materialteile verschleißbedingt ausbrechen.

Unerläßlich ist die Anpassung des Beschlags an die Einzelform jedes Hufs. Das hat man durch Abraspeln überstehender Materialteile gemacht, was nicht schnell vor sich geht und auch Nacharbeit zum Glätten erfordern kann. Es gibt allerdings Vorrichtungen zum Zuschneiden von Kunststoff-Hufschutz, die typisch mit einem Motorantrieb versehen sind. Dieser ist jedoch aufwendig und im Freien oft unpraktisch. Auf einer Weide ist allgemein kein Stromanschluß vorhanden; gerade dort ist aber das Anpassen eines Kunststoff-Hufschutzes vielfach erwünscht oder notwendig.

Ziel der Erfindung ist es, dem abzuhelfen und ein Schneidgerät zu entwickeln, das einfach aufgebaut, kostengünstig herzustellen und problemlos zu benutzen ist. Insbesondere soll es damit möglich sein, im Handbetrieb irgendwo rasch eine Hufschutz-Anpassung vorzunehmen, vor allem auch in freiem Gelände.

Hauptmerkmale der Erfindung sind in Anspruch 1 angegeben. Ausgestaltungen sind Gegenstand der Ansprüche 2 bis 18.

Ein erfindungsgemäßes Schneidgerät für Kunststoff-Hufbeschläge hat eine Grundplatte, auf der eine Welle gelagert ist, die ein neben einer Werkstück-Auflage befindliches Schneidrad trägt und mittels einer Handhabe antreibbar ist. Die Konstruktion ist außerordentlich einfach; sie besteht nur aus wenigen Bauteilen, die mit geringem Aufwand hergestellt und montiert werden können. Die Verwendung des handlichen, tragbaren Geräts ist ortsunabhängig möglich, ohne daß eine Stromquelle benötigt würde.

Mit Vorteil haltert die Grundplatte einen Lagerbock für die Welle, die darin in einer Hülse reibungsarm und präzise geführt sein kann. Alternativ kann die Grundplatte einen Winkel aufweisen, der die Lagerung der Welle trägt oder bildet, beispielsweise einen als Stanzteil aus der Grundplatte namentlich unter 90° zur Plattenoberfläche hochgekanteten Winkel.

Das Schneidrad ist bevorzugt auswechselbar an der Welle befestigt; es kann ein Messer, Kreissägeblatt o.dgl. sein, das einseitig angeschliffen ist, insbesondere mit spitzem Konuswinkel, was den Angriff am Werkstück erleichtert. Vorteilhaft weist das Schneidrad eine Zahnung auf, namentlich mit asymmetrischem Zahnprofil, so daß das Werkstück durch die positive Schneidrad-Drehung eingezogen wird. Ein im Bereich oberhalb des Schneidrades vorhandenes oder in diesen Bereich bewegbares und dort arretierbares Schutzblech dient zum Schutz vor Verletzungen beim Arbeiten mit dem Gerät.

In weiterer Ausgestaltung der Erfindung ist der Drehsinn der Welle nach Bedarf umkehrbar, z.B. um den Einzug des Werkstücks zu unterstützen bzw. zu justieren oder um es bequem zu entnehmen. In besonders zweckmäßiger Weise wird die Welle mittels einer auf ein profiliertes Wellenende aufsteckbaren Kurbel, Handratsche o.dgl. angetrieben, die einen Griffhebel aufweisen kann, der zwecks Erhöhung des Antriebsmoments gegebenenfalls verlängert wird, z.B. durch teleskopischen Auszug. Besonders bequem ist die Verwendung einer umschaltbaren Ratsche.

Die Werkstück-Auflage ist auf der Grundplatte vorzugsweise verstellbar und/oder austauschbar angebracht, um optimale Arbeitsbedingungen erzielen zu können. Zu dem Schneidrad hin definiert die Werkstück-Auflage einen Schnittspalt, d.h. das Schneidspiel, das man auf günstigste Bearbeitung einstellt. Dabei kann es nützlich sein, die Werkstück-Auflage einer Huf-Gestalt angepaßt oder anpaßbar auszubilden. Ferner wird die sichere Handhabung unterstützt, wenn die Werkstück-Auflage Haltemittel für das Werkstück aufweist, etwa eine Klemmeinrichtung oder indem sie eine aufgerauhte, geriffelte und/oder mit einer Haftschicht versehene Oberfläche hat.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine Vorderansicht eines erfindungsgemäßen Schneidgeräts.
- Fig. 2: eine Draufsicht, teilweise im Axialschnitt, auf das Gerät von Fig. 1,
- Fig. 3: eine Seitenansicht, teilweise im Axialschnitt, des Schneidgeräts von Fig. 1 bzw. Fig. 2, jedoch ohne Handhabe,

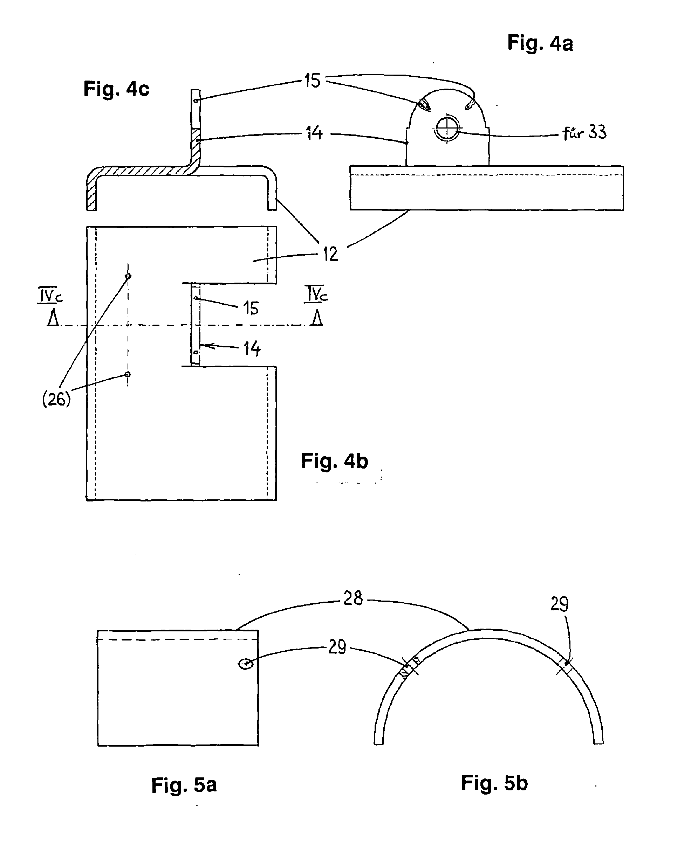

- Fig. 4a: eine Vorderansicht einer Grundplatte mit Winkel,
- Fig. 4b: eine Draufsicht auf die Platte von Fig. 4a sowie
- Fig. 4c: eine Schnittansicht entsprechend der Linie IVc-IVc in Fig. 4b,
- Fig. 5a: eine Seitenansicht eines Schutzblechs,
- Fig. 5b: eine Vorderansicht des Schutzblechs von Fig. 5a,
- Fig. 6a: eine Stirnansicht, teilweise im Schnitt, einer Buchse,
- Fig. 6b: eine Axialschnittansicht der Buchse von Fig. 6a,
- Fig. 7a: eine Stirnansicht des Aufsteckendes einer Welle,
- Fig. 7b: eine Seitenansicht, teilweise im Schnitt, der Welle von Fig. 7a,
- Fig. 7c: eine Stirnansicht der Welle von Fig. 7a vom entgegengesetzten Ende,
- Fig. 8a: einen Längsschnitt durch ein Schneidrad und
- Fig. 8b, c, d: je eine Vorderansicht eines Schneidrades.

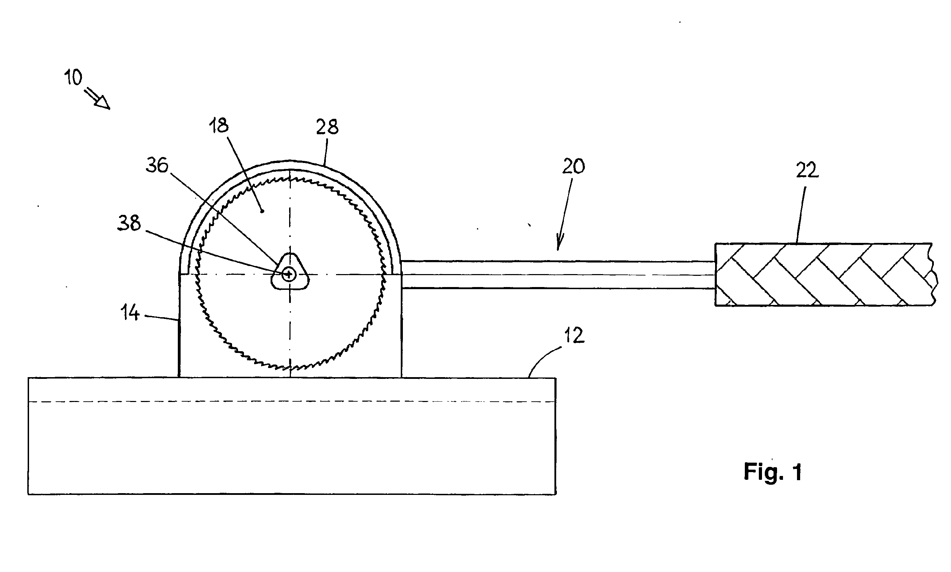

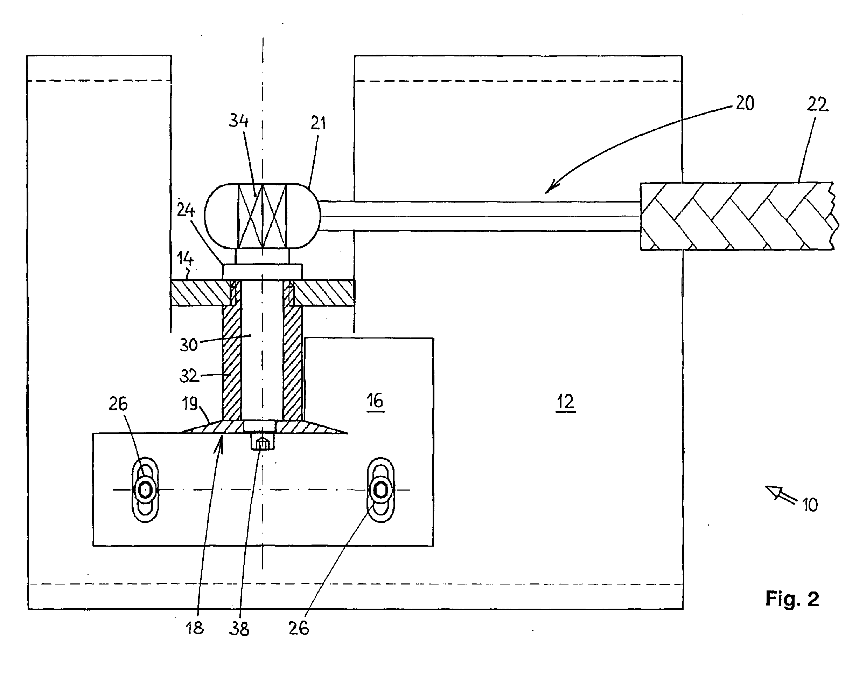

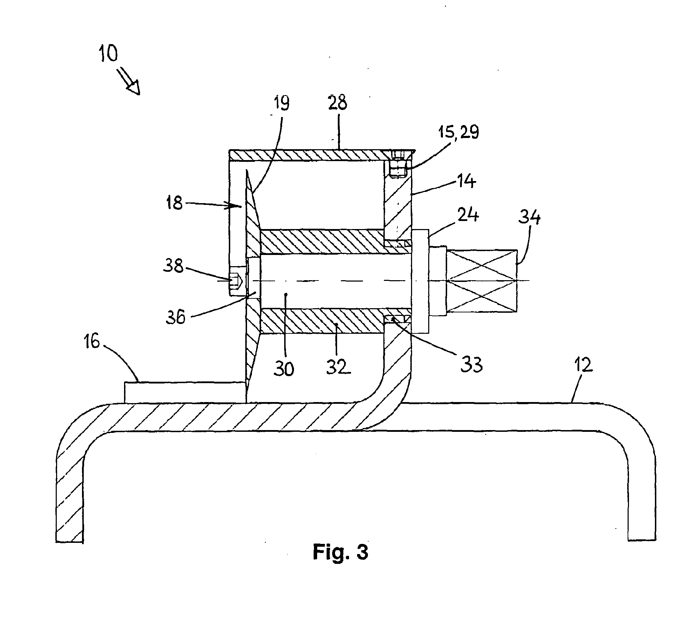

Schematisch zeigen Fig. 1 bis Fig. 3 ein allgemein mit 10 bezeichnetes Schneidgerät, das eine Grundplatte 12 mit davon senkrecht nach oben abstehendem Winkel 14 aufweist. Dieser bildet die Halterung für eine Buchse 32, in der eine Welle 30 geführt ist, die an einem Paß-Ende 36 ein Schneidrad 18 trägt, das daran mit einer Halteschraube 38 befestigt ist. Ein Schutzblech 28 überdeckt den oberen Bereich des Schneidrades 18. An einem als Vierkant ausgebildeten Wellenstummel 34 der Welle 30 greift eine Handhabe 20 an, die bevorzugt eine umschaltbare Ratsche mit einem Ratschenkopf 21 und einem Griffhebel 22 ist.

Ein Flansch 24 der Welle 30 liegt rückseitig an dem Winkel 14 an, in den die Buchse 32 mit einem Schraubansatz 33 eingeschraubt ist. Am Vorderende der Buchse 32 ist das mit der Welle 30 fest verbundene Schneidrad 18 gleitbeweglich angeordnet, das rückseitig einen Konusschliff 19 aufweist. Vor dem Schneidrad 18 befindet sich eine Werkstück-Auflage 16, die im gezeichneten Beispiel als Eckplatte ausgebildet ist, welche innerhalb einer Langloch-Befestigung 26 tiefenverstellt werden kann. Damit läßt sich der Schnittspalt bzw. das Schneidspiel zum Schneidrad 18 hin justieren. Die Befestigung des Schutzblechs 28 geschieht mittels Schrauben, die durch Bohrungen 29 des Blechs 28 hindurch in Gewindelöcher 15 des Winkels 14 eingeschraubt werden.

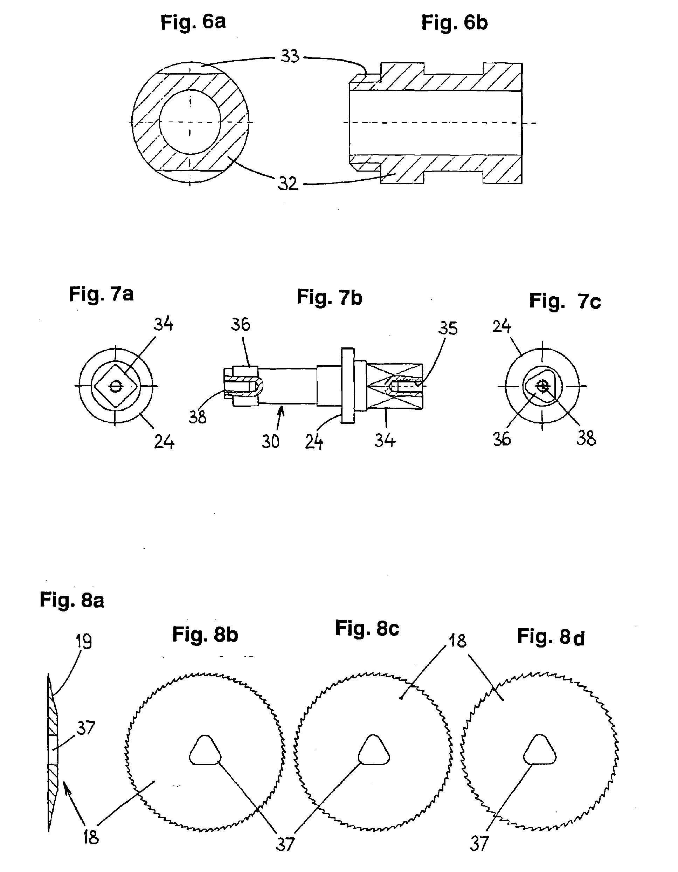

Das Schneidrad 18 ist an der Welle 30 austauschbar befestigt. Für sicheren Sitz sorgt eine Paß-Öffnung 37 (Fig. 8a bis Fig. 8d), die formschlüssig auf das Paß-Ende 36 der Welle 30 aufsetzbar ist. Bevorzugt haben die Elemente 36, 37 Polygonform, z.B. als gerundeter Dreikant.

Am gegenüberliegenden Ende der Welle 30 hat der Wellenstummel 34 ein axiales Sack-Gewindeloch 35, beispielsweise um daran eine Handhabe 20 zu befestigen. Insbesondere ist der Wellenstummel 34 jedoch als Vierkant ausgebildet, auf den der Ratschenkopf 21 einer handelsüblichen Ratsche als Handhabe 20 aufgesteckt werden kann, ohne daß eine Fixierung erforderlich wäre.

Aus Fig. 8a bis Fig. 8d geht hervor, daß das einseitig mit dem Konusschliff 19 versehene Schneidrad 18 bevorzugt eine Zahnung aufweist, und zwar mit asymmetrischem Zahnprofil in der Art eines Kreissägeblattes. Man erkennt, daß je nach der auszuführenden Arbeit ein Schneidrad mit feiner Zahnung (Fig. 8b) oder mit mittlerer Zahnung (Fig. 8c) oder mit grober Zahnung (Fig. 8d) eingesetzt werden kann.

Die Erfindung ist nicht auf eine der vorbeschriebenen Ausführungsformen beschränkt, sondern in vielfältiger Weise abwandelbar. Zusammenfassend ist jedoch festzuhalten, daß eine bevorzugte Bauform eines Schneidgeräts 10 für Kunststoff-Hufbeschläge auf einer Grundplatte 12 eine Welle 30 lagert, die ein neben einer Werkstück-Auflage 16 befindliches Schneidrad 18 trägt und mittels einer Handhabe 20 antreibbar ist. Die Lagerung der Welle 30 trägt oder bildet einen Winkel 14, der aus der Grundplatte 12 hochgekantet ist, namentlich unter 90° zur Plattenoberfläche. Das Schneidrad 18 ist auswechselbar an der in einer Buchse 32 geführten Welle 30 befestigt. Es kann als Messer, Kreissägeblatt o.dgl. ausgebildet und einseitig angeschliffen sein, insbesondere mit spitzem Konuswinkel. In Gestalt eines Kreissägeblatts weist es eine Zahnung auf, namentlich mit asymmetrischem Zahnprofil. Oberhalb des Schneidrades 18 ist ein Schutzblech 28 vorhanden. Eine umschaltbare Handratsche 20 kann einen verlängerbaren Griffhebel 22 aufweisen und mit ihrem Griffkopf 21 auf einen z.B. vierkantförmig profilierten Wellenstummel 34 aufgesteckt werden. Die Werkstück-Auflage 16 ist auf der Grundplatte 12 verstellbar und/oder austauschbar angebracht; sie definiert zu dem Schneidrad 18 hin einen Schnittspalt. Sie ist ferner bevorzugt einer Huf-Gestalt angepaßt oder anpaßbar und kann Haltemittel für das Werkstück aufweisen, beispielsweise eine Klemmeinrichtung oder auch eine aufgerauhte, geriffelte und/oder mit einer Haftschicht versehene Oberfläche.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- 10: Schneidgerät
- 12: Grundplatte
- 14: Winkel
- 15: Gewindelöcher
- 16: Werkstück-Auflage
- 18: Schneidrad
- 19: Konusschliff
- 20: Handhabe / Ratsche
- 21: Ratschenkopf
- 22: Griffhebel
- 24: Flansch
- 26: Langloch-Befestigung
- 28: Schutzblech
- 29: Bohrungen
- 30: Welle
- 32: Buchse
- 33: Schraubansatz
- 34: Wellenstummel / □
- 35: Gewindeloch
- 36: Paß-Ende
- 37: Paß-Öffnung
- 38: Halteschraube

## Patentansprüche

1. Schneidgerät (10) für Kunststoff-Hufbeschläge, mit einer Grundplatte (12), auf der eine Welle (30) gelagert ist, die ein neben einer Werkstück-Auflage (16) befindliches Schneidrad (18) trägt und mittels einer Handhabe (20) antreibbar ist.

2. Schneidgerät nach Anspruch 1, **dadurch gekennzeichnet, daß** die Grundplatte (12) einen Lagerbock für die Welle (30) haltert.

3. Schneidgerät nach Anspruch 1, **dadurch gekennzeichnet, daß** die Grundplatte (12) einen Winkel (14) aufweist, der die Lagerung der Welle (30) trägt oder bildet.

4. Schneidgerät nach Anspruch 3, **dadurch gekennzeichnet, daß** der Winkel (14) aus der Grundplatte (12) hochgekantet ist, namentlich unter 90° zur Plattenoberfläche.

5. Schneidgerät nach einem der Ansprüche 1 bis 4, **dadurch gekennzeichnet, daß** die Welle (30) in einer Buchse (32) geführt ist.

6. Schneidgerät nach einem der Ansprüche 1 bis 5, **dadurch gekennzeichnet, daß** das Schneidrad (18) auswechselbar an der Welle (30) befestigt ist.

7. Schneidgerät nach einem der Ansprüche 1 bis 6, **dadurch gekennzeichnet, daß** das Schneidrad (18) als Messer, Kreissägeblatt o.dgl. ausgebildet ist.

8. Schneidgerät nach einem der Ansprüche 1 bis 7, **dadurch gekennzeichnet, daß** das Schneidrad (18) einseitig angeschliffen ist, insbesondere mit spitzwinkeligem Konusschliff (19).

9. Schneidgerät nach einem der Ansprüche 1 bis 8, **dadurch gekennzeichnet, daß** das Schneidrad (18) eine Zahnung aufweist, namentlich mit asymmetrischem Zahnprofil (Fig. 18b bis 18d).

10. Schneidgerät nach einem der Ansprüche 1 bis 9, **dadurch gekennzeichnet, daß** ein Schutzblech (28) im Bereich oberhalb des Schneidrades (18) vorhanden oder in diesen Bereich bewegbar und dort arretierbar ist.

11. Schneidgerät nach einem der Ansprüche 1 bis 10, **dadurch gekennzeichnet, daß** der Drehsinn der Welle (30) umkehrbar ist.

12. Schneidgerät nach einem der Ansprüche 1 bis 11, **dadurch gekennzeichnet, daß** die Handhabe (20) einen gegebenenfalls verlängerbaren Griffhebel (22) aufweist.

13. Schneidgerät nach einem der Ansprüche 1 bis 12, **dadurch gekennzeichnet, daß** die Handhabe (20) eine auf einen profilierten Wellenstummel (34) aufsteckbare Kurbel, Handratsche o.dgl. ist.

14. Schneidgerät nach einem der Ansprüche 1 bis 13, **dadurch gekennzeichnet, daß** die Werkstück-Auflage (16) auf der Grundplatte (12) verstellbar und/oder austauschbar angebracht ist.

15. Schneidgerät nach Anspruch 14, **dadurch gekennzeichnet, daß** die Werkstück-Auflage (16) zu dem Schneidrad (18) hin einen Schnittspalt definiert.

16. Schneidgerät nach Anspruch 14 oder 15, **dadurch gekennzeichnet, daß** die Werkstück-Auflage (16) einer Huf-Gestalt angepaßt oder anpaßbar ist.

17. Schneidgerät nach einem der Ansprüche 14 bis 16, **dadurch gekennzeichnet, daß** die Werkstück-Auflage (16) Haltemittel für das Werkstück aufweist, beispielsweise eine Klemmeinrichtung.

18. Schneidgerät nach Anspruch 17, **dadurch gekennzeichnet, daß** die Werkstück-Auflage (16) eine aufgerauhte, geriffelte und/oder mit einer Haftschicht versehene Oberfläche hat.
